# EUROPEAN PATENT SPECIFICATION

(11) **EP 1 082 588 B1**
(45) Date of publication and mention of the grant of the patent: **08.09.2004**
(21) Application number: 99923325.7
(22) Date of filing: 25.05.1999
(51) Int. Cl.: G01F 1/30, G01F 1/80, A01D 25/00

(54) **ROOT CROPS HARVESTER WITH OUTPUT MEASUREMENT SENSOR**
ERNTEMASCHINE FÜR WURZELFRÜCHTE MIT MASSENDURCHFLUSSMESSER
INDICATEUR DE MESURE DES QUANTITES RECOLTEES

(30) Priority: 25.05.1998 BE 9800396
(43) Date of publication of application: 14.03.2001
(73) Proprietor: K.U. LEUVEN RESEARCH & DEVELOPMENT, 3000 Leuven (BE)
(72) Inventor: DE BAERDEMAEKER, Josse, B-1785 Merchtem (BE); MISSOTTEN, Bart, B-3000 Leuven (BE); BROOS, Bert, B-3460 Bekkevoort (BE); STRUBBE, Gilbert, B-8210 Zedelgem (BE)
(74) Representative: Callewaert, Jean
(86) International application number: PCT/BE1999/000065
(87) International publication number: WO 1999/061871

(56) References cited:
- EP-A- 0 753 720
- WO-A-89/07387

## Description

The present invention concerns a device which can be moved over a field for measuring the mass output of root crops, such as beets, turnips or chicory, while they are being harvested, which is equipped with a sensor plate against which the crops are guided, and with a drive instrument which subjects the crops to an at least partially bent flow and puts them in contact with the above-mentioned sensor plate, which is provided with means for measuring the above-mentioned output.

According to the present state of the art (see e.g. Durrence, J.S., "Mapping peanut yield variability with an experimental load cell yield monitoring system", 4th International conference on precision agriculture, St Paul, Minnesota USA, July 1998, and Ehlert, D., "Measuring mass flow of potatoes for yield mapping", Proceedings Precision Agriculture 1999, Odense, SI, Part B, p 797-804), the output of root crops during their harvesting is measured by measuring for example the weight of a hopper in which they are gathered as a function of time, or by determining the weight variations of a conveyor belt over which the harvested crops are moved. Also tests have been carried out in order to determine the output of beets by measuring their impact as they are thrown at a constant speed onto a flat plate via a conveyor belt.

None of these methods allow for a precise measuring of the output, however, as the influence of unevennesses of a field, the vibrations of the harvester or the amount of earth which is carried along is too large.

The European patent application EP-A-0 753 720 discloses a device for metering the mass flow of bulk material, such as grain kernels. A continuous stream of grain kernels is thrown from a conveyor towards a movable sensor plate. The displacement of this sensor plate is measured in order to determine the flow rate of the grain kernels.

This device is not at all suited for measuring of the flow rate of root crops which are far more heavier than grain kernels, show an irregular shape and which normally are covered with some soil.

The present invention aims to remedy these disadvantages and to provide a device which is particularly suitable for measuring the output during the harvesting of root crops and whose measuring results are practically independent of the bulk qualities of the crops, such as for example moisture content, friction, etc. Moreover, the device according to the invention is applicable to almost any harvester for root crops.

To this aim, the above-mentioned sensor plate is mounted such that, when the crops act on it, they are simultaneously put in contact with the above-mentioned drive instrument.

Practically, the drive instrument which drives the above-mentioned flow contains a rotating disk upon which the above-mentioned crops rest, whereby the sensor plate extends according to the perimeter of said disk and transversely to its surface.

In an advantageous manner, the above-mentioned sensor plate can move in relation to the disk under the pressure of the crops which are guided against the sensor plate by the latter, which movement or force or moment is a function of the output of the harvested crops.

According to a special embodiment of the device according to the invention, the above-mentioned sensor plate is mounted in a rotating manner around an axis of rotation, such that it can undergo a movement which depends on the force with which the above-mentioned crops push against the sensor plate as they are moved by the above-mentioned drive instrument, whereby means are provided which make it possible to measure this force and/or the moment in relation to the axis of rotation.

According to a preferred embodiment of the device according to the invention, said axis of rotation is selected such that the frictional force of the crops against the sensor plate has a minimal impact on the moment to be measured in relation to the above-mentioned axis of rotation.

According to a further embodiment of the device according to the invention, it is provided with a counterweight, such that the centre of gravity of the whole, formed by the above-mentioned sensor plate and the counterweight, coincides on the above-mentioned axis of rotation.

Other particularities and advantages of the invention will become clear from the following description of a number of specific embodiments of the device for measuring the output of root crops as they are being harvested according to the invention; the following description is given as an example only and does not restrict the scope of the claims in any way; the reference figures used hereafter refer to the accompanying drawings.
Figure 1 is a schematic side view of a harvester with a partial section, equipped with the device according to the invention.
Figure 2 is a schematic top view of a drive instrument with the device according to the invention.
Figure 3 is a schematic side view of the device according to the invention.
Figure 4 is a graph representing the percentage of soil that is removed from the root crops as they are harvested, as a function of the number of cleaning steps.
Figure 5 is a graph which represents the impact load of root crops as they are harvested.

In the different drawings, the same reference figures refer to the same analogous elements.

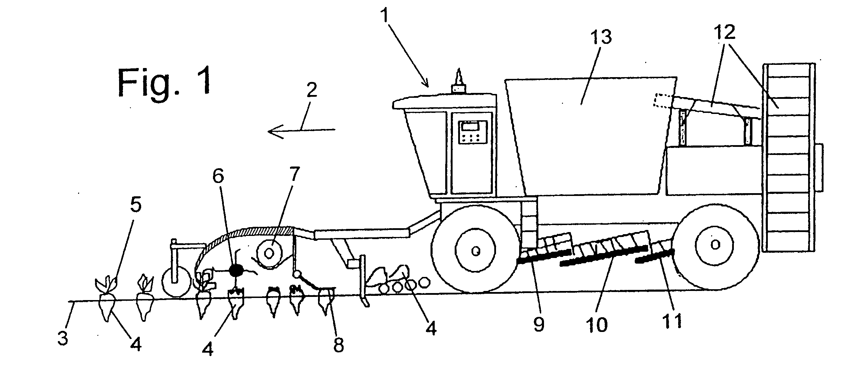

Figure 1 represents a harvester 1 with a device according to the invention for measuring the output of root crops 4, which moves according to arrow 2 over the surface 3 of a field with root crops 4, in particular beets.

These root crops 4 are harvested by the harvester 1 in a manner known as such. Thus, these root crops 4 are first stripped from their haulm 5 by means of a clapper shaft 6, whereby this haulm 5 is carried off sideways via an auger 7. The root crops 4 are then topped by a topping knife 8, lifted from the ground and put on a first drive instrument 9 by a conveyor system which is not represented in the figures. The root crops 4 are then carried further into a hopper 13 via drive instruments 10 and 11 and a conveyor belt 12. In this manner is created an almost continuous bulk flow of root crops 4.

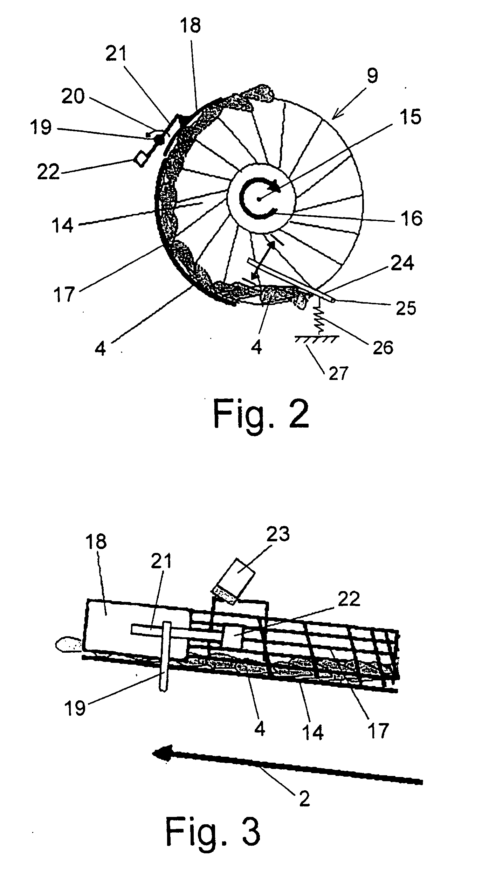

The drive instruments 9, 10 and 11 are each equipped with a circular disk 14, as represented in figure 2. The disk 14 can rotate around its central axis 15 according to the sense of arrow 16 and is driven to this end by a mechanism which is not represented in the figures either.

On the perimeter of the disk 14 is provided a fixed wall, standing diagonally on the surface of the disk 14, in the shape of what is called a sieve rack 17. This sieve rack 17 has the shape of a grid, so that soil which is carried along with the root crops 4 can be discharged at least partially via this way. Also the disk 14 preferably consists of a grid, so that soil is removed via this way as well.

In the device according to the invention which contains said drive instrument 9, 10 or 11, a sensor plate 18 is provided on the perimeter, connected to the above-mentioned sieve rack 17, which makes it possible to measure the force exerted on the latter by the root crops 4, as a result of the rotational movement of the disk 14, by means of a sensor which is not represented in the figures. The root crops 4 are carried along by the disk 14 in a bent flow and rub against the sieve rack 17 and the sensor plate 18 as a result of the centrifugal force, the driving force, the frictional force and possibly the gravitational force.

On the basis of this measured force is calculated the output of the root crops 4 which move along the sensor plate 18 as they are driven at a preferably constant speed by the disk 14.

In order to make it possible to measure the force exerted by the root crops 4 on the sensor plate 18, the latter is mounted such that it can undergo a movement in a direction which is parallel to the surface of the disk 14. This movement depends on the force exerted by the root crops 4 on the sensor plate 18 and thus on the number of beets which are moved by the disk 14 per unit of time.

According to a preferred embodiment of the device according to the invention, the sensor plate 18 has an axis of rotation 19 which is almost parallel to the axis 15 of the disk 14. The above-mentioned sensor then measures the moment 20 in relation to said axis of rotation 19, exerted by the root crops 4 on the sensor plate 18.

Apart from a centrifugal force, the root crops 4 also exert a frictional force on the sensor plate 18. This frictional force varies among others as a function of the amount of soil sticking to the root crops 4, its tackiness and moisture content, as well as the speed of rotation of the disk 14.

It was found that, when this frictional force is calculated and integrated over the surface of the sensor plate 18, there are certain positions for the above-mentioned axis of rotation 19 in which the moment of this frictional force is negligible in relation to the moment of the other forces that are exerted on the sensor plate 18. Thus, the position of the axis of rotation 19 is preferably selected such that the above-mentioned moment of the frictional force in relation to the axis of rotation 19 is minimal.

This makes it possible to measure the output of the flow of root crops 4 very precisely on the basis of the thus measured moment in relation to the axis of rotation 19, such without any dependency on the coefficient of friction between the root crops 4 and the sensor plate 18.

The axis of rotation 19 is provided on a moment arm 21 which connects the sensor plate 18 to a counterweight 22, such that the centre of gravity of the sensor plate 18 and the counterweight 22 is situated on the axis of rotation 19. Thus is made sure that the sensor plate 18 undergoes practically no movement which can be measured by said sensor when there are no root crops on the disk 14 as the harvester 1 is moving over rough ground or when it is situated on a slope.

Further, the device according to the invention is preferably provided with an inclinometer which makes it possible to correct the measured moment as a function of the inclination of the device. For, when the harvester 1 is situated on a sloping field, the root crops 4 exert an additional force on the sensor plate 18, depending of the direction of the slope. In this manner is prevented that said additional force has any influence on the measuring of the output.

In order to make the supplied root crops 4 push against the sensor plate 18, the disk 14 is provided with a guide plate 24 which guides the root crops 4 which have been thrown on said disk 14 to the outer edge of the latter. The guide 24 can rotate around an axis of rotation 25 so as to be able to guide the flow of crops in an appropriate manner, both when the output is low or high. When it is erected in a pivoting manner, the guide 24 is pulled to the edge of the disk with a resilient tensile force or pressure force. In figure 2, this is schematically represented by a draw spring 26 which is connected to the frame 27 of the device. Thanks to its pivoting erection, the guide 24 fits in better with the flow and consequently provides for a better guiding without the maximum ongoing output being reduced. The axis of rotation 25 of the guide 24 is almost parallel to the axis 15 of the disk 14.

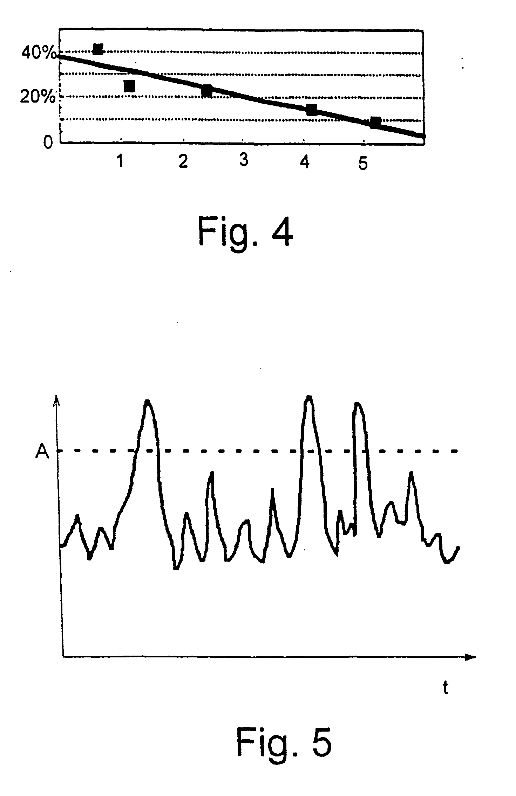

According to a particular embodiment of the device according to the invention, it is equipped with a weighing appliance, not represented in the figures, which makes it possible to determine the weight of the crops which are being moved on the above-mentioned disk 14. This makes it possible, as represented in figure 1, to put several drive instruments 9, 10 and 11 in series with co-operating sensor plates 18 and to determine the loss of weight during the cleaning of the root crops 4 which are carried along. When the flow meter is applied several times in series as described here, either or not in combination with a weighing of the disk or disks 14, it becomes possible to set out a soil separation curve. Such a curve is represented in figure 4 and represents the percentage of weight loss as a function of the cleaning distance. This curve subsequently makes it possible to calculate the final residual value of the soil sticking to the beets by means of extrapolation of the curve. This curve is determined among others by the harvest conditions and the settings of the machine. By continuously measuring this separation curve and calculating the residual value of soil tare, one can develop an automatic or manual setting which makes it possible to adjust the machine such (driving speed, rotational speed, sieve mechanism) that a maximum capacity with a minimum tare, to be set for example by the driver, can be obtained. The setting and calculation are obvious, so that it was not deemed necessary to further describe them in detail. In an analogous manner, also damages can be measured and controlled.

In the embodiment of the device according to the invention represented in figure 3, a speedometer 23 has been mounted above the disk 14, such that the speed of rotation of the latter or the speed of the root crops 4 can be controlled. For, the rotational speed of the disk 14 affects the measuring of the force exerted by the root crops 4 on the sensor plate 18. By making corrections on the output measurement on the basis of the measured speed or by adjusting the speed of the disk 14, it becomes possible to control the output in a more precise manner.

When the disk 14 has a small diameter or rotates at low rotational speeds, a correction should possibly be made on the measured output, as the flow of root crops 4 may then have a certain width, so that not all crops make contact with the sensor plate 18. In order to determine the scope of said correction, the width of the flow of root crops 4 is measured by means of a suitable measuring appliance which is not represented in the figures. This layer thickness could also be measured by means of the position of the pivoting guide 24 in figure 2.

Figure 5 represents a graph of the force, measured on the sensor plate 18, as a function of time. When this force exceeds a limit value A, the root crops 4 will be damaged. In order to avoid this, the device according to the invention contains a control system which adjusts the speed of rotation of the disk 14, such that the force measured on the sensor plate 18 does not exceed this value A.

The device according to the invention can be easily mounted on practically all harvesters 1. If several drive instruments with a rotating disk 14 are provided, this device is preferably fixed on the drive instrument onto which the root crops 4 are ultimately carried, since the major part of the soil has then already been removed from the crops 4.

When, together with the output measuring, also the concentration of certain components of the root crop is measured and the position of the device on the field is continuously controlled, it becomes possible to determine the spread of the yield of these components on the field. This makes it possible, for example, to map the soil conditions of the field and to adjust the fertilisation of the field accordingly. This relates in particular to the measuring of the sugar content during the harvesting of sugar beets, so that the sugar output can be measured as a function of the position on the field.

Naturally, the present invention is not restricted to the above-described embodiments of the device according to the invention represented in the accompanying drawings.

The above-mentioned sensor plate 18 may for example also have the shape of a sieve rack 17 in order to maintain a sufficiently large separation of soil on the drive instruments.

## Claims

1. Device which can be moved over a field for measuring the output of root crops (4), such as beets, turnips or chicory, while they are being harvested, which is equipped with a sensor plate (18) against which the crops (4) are guided, and with a drive instrument (9,10,11) which subjects the crops (4) to an at least partially bent flow and puts them in contact with the above-mentioned sensor plate (18), which is provided with means for measuring the above-mentioned output, **characterised in that** said drive instrument (9,10,11) is mounted in such relation to the sensor plate (18) that the harvested crops (4) are carried along by the drive instrument (9,10,11) along and against the sensor plate (18) while being in contact with said drive instrument.

2. Device according to claim 1, **characterised in that** the drive instrument (9,10,11) which causes the above-mentioned flow contains a disk (14) which can rotate around its axis upon which said crops (4) are carried along, whereby the sensor plate (18) extends according to at least a part of the perimeter of this disk (14) and transversely in relation to its surface.

3. Device according to claim 2, **characterised in that** the above-mentioned sensor plate (18) can be moved in relation to the disk (14) under pressure of the crops (4) which are guided against the sensor plate (18) by the latter, which movement is a function of the output of the harvested crops (4).

4. Device according to claim 2 or 3, **characterised in that** it is provided with a possibly moveable, in particular a rotating guiding plate (24) for guiding the crops (4) which end up on said disk (14) to the outer edge of the latter.

5. Device according to any of claims 1 to 4, **characterised in that** the above-mentioned sensor plate (18) is mounted in a rotating manner around an axis of rotation (19), such that it can undergo a movement which depends on the force with which the above-mentioned crops (4) push against the sensor plate (18) as they are moved by the above-mentioned drive instrument (9,10,11), whereby means are provided which make it possible to measure this force and/or the moment (20) in relation to the axis of rotation (19).

6. Device according to claim 5, **characterised in that** the sensor plate (18) has a moment arm (21) onto which the above-mentioned axis of rotation (19) is provided.

7. Device according to claim 5 or 6, **characterised in that** the position of said axis of rotation (19) corresponds to a position in which the moment of the frictional force of the root crops exerted on the sensor plate (18) integrated over the surface of the sensor plate (18) is minimal or negligible in relation to the moment of other forces exerted on the sensor plate (18).

8. Device according to any of claims 5 to 7, **characterised in that** the sensor plate (18) is provided with a counterweight (22), such that the centre of gravity of the whole, formed by the above-mentioned sensor plate (18) and the counterweight (22), is situated on the above-mentioned axis of rotation (19).

9. Device according to any of claims 1 to 8, **characterised in that** the above-mentioned drive instrument (9,10,11) is equipped with a weighing appliance which makes it possible to determine the weight of the crops (4) which are put in contact with said drive instrument (9,10,11).

10. Device according to any of claims 1 to 9, **characterised in that** it is provided with a speedometer which makes it possible to adjust the propelling speed of the device, such that the measured output of the crops (4) remains constant.

## Patentansprüche

1. Vorrichtung, die über ein Feld zum Messen des Ertrags von Wurzelfrüchten (4), wie beispielsweise Runkelrüben, Steckrüben oder Chicorée, während sie geerntet werden, bewegt werden kann, die mit einer Sensorplatte (18), gegen die die Früchte (4) geführt werden, und mit einem Antriebsinstrument (9, 10, 11), das die Früchte (4) einem zumindest teilweise gekrümmten Fluss unterwirft und sie in Kontakt mit der vorstehend erwähnten Sensorplatte (18) bringt, ausgestattet ist, die mit einer Einrichtung zum Messen des vorstehend angegebenen Ertrags versehen ist, **dadurch gekennzeichnet, dass** das Antriebsinstrument (9, 10, 11) in einer solchen Beziehung zu der Sensorplatte (18) befestigt ist, dass die geernteten Früchte (4) entlang des Antriebsinstruments (9, 10, 11) entlang der Sensorplatte (18) und gegen diese getragen werden, während sie in Kontakt mit dem Antriebsinstrument stehen.

2. Vorrichtung nach Anspruch 1, **dadurch gekennzeichnet, dass** das Antriebsinstrument (9, 10, 11), das den vorstehend erwähnten Fluss bewirkt, eine Scheibe (14) enthält, die sich um deren Achse drehen kann, auf der die Früchte (4) entlang getragen werden, wodurch sich die Sensorplatte (18) entsprechend zumindest einem Teil des Umfangs dieser Scheibe (14) und quer in Bezug auf deren Oberfläche ausdehnt.

3. Vorrichtung nach Anspruch 2, **dadurch gekennzeichnet, dass** die vorstehend erwähnte Sensorplatte (18) in Relation zu der Scheibe (14) unter Druck der Früchte (4), die gegen die Sensorplatte (18) durch die letztere geführt werden, bewegt werden kann, wobei die Bewegung eine Funktion der Abgabe der geernteten Früchte (4) ist.

4. Vorrichtung nach Anspruch 2 oder 3, **dadurch gekennzeichnet, dass** sie mit einer möglicherweise bewegbaren, insbesondere einer sich drehenden, Führungsplatte (24) zum Führen der Früchte (4), die auf die Scheibe (14) gelangen, zu der äußeren Kante der letzteren versehen ist.

5. Vorrichtung nach einem der Ansprüche 1 bis 4, **dadurch gekennzeichnet, dass** die vorstehend erwähnte Sensorplatte (18) in einer sich drehenden Art und Weise um eine Drehachse (19) herum befestigt ist, so dass sie einer Bewegung unterliegen kann, die von der Kraft abhängt, mit der die vorstehend erwähnten Früchte (4) gegen die Sensorplatte (18) drücken, wenn sie durch das vorstehend erwähnte Antriebsinstrument (9, 10, 11) bewegt werden, wobei Mittel vorgesehen sind, die es möglich machen, die Kraft und/oder das Moment (20) in Bezug auf die Drehachse (19) zu messen.

6. Vorrichtung nach Anspruch 5, **dadurch gekennzeichnet, dass** die Sensorplatte (18) einen Momentenarm (21) besitzt, auf dem die vorstehend erwähnte Drehachse (19) vorgesehen ist.

7. Vorrichtung nach Anspruch 5 oder 6, **dadurch gekennzeichnet, dass** die Position der Drehachse (19) einer Position entspricht, in der das Moment der Reibungskraft der Wurzelfrüchte, ausgeübt auf die Sensorplatte (18), integriert über die Oberfläche der Sensorplatte (18), minimal oder vernachlässigbar in Bezug auf das Moment von äußeren Kräften, ausgeübt auf die Sensorplatte (18), ist.

8. Vorrichtung nach einem der Ansprüche 5 bis 7, **dadurch gekennzeichnet, dass** die Sensorplatte (18) mit einem Gegengewicht (22) versehen ist, so dass der Schwerpunkt des Ganzen, gebildet durch die vorstehend erwähnte Sensorplatte (18) und das Gegengewicht (22), auf der vorstehend erwähnten Drehachse (19) liegt.

9. Vorrichtung nach einem der Ansprüche 1 bis 8, **dadurch gekennzeichnet, dass** das vorstehend erwähnte Antriebsinstrument (9, 10, 11) mit einer Gewichtungseinrichtung versehen ist, die es möglich macht, das Gewicht der Früchte (4), die in Kontakt mit dem Antriebsinstrument (9, 10, 11) gebracht werden, zu bestimmen.

10. Vorrichtung nach einem der Ansprüche 1 bis 9, **dadurch gekennzeichnet, dass** sie mit einem Geschwindigkeitsmesser versehen ist, der es möglich macht, die Ausstoßgeschwindigkeit der Vorrichtung einzustellen, so dass der gemessene Durchsatz der Früchte (4) konstant verbleibt.

## Revendications

1. Dispositif qui peut être déplacé sur un champ pour mesurer la quantité récoltée de racines alimentaires (4), telles que des betteraves, des navets et des endives, pendant qu'elles sont arrachées, qui est équipé d'une plaque d'indicateur (18) contre laquelle les racines alimentaires (4) sont guidées, et d'un instrument d'entraînement (9, 10, 11) qui soumet les racines alimentaires (4) à un courant au moins partiellement courbe et qui les met en contact avec la plaque d'indicateur mentionnée ci-dessus (18), qui est pourvue d'un moyen pour mesurer la quantité récoltée mentionnée ci-dessus, **caractérisé en ce que** ledit instrument d'entraînement (9, 10, 11) est monté par rapport à la plaque d'indicateur (18) de telle façon que les racines alimentaires arrachées (4) soient transportées par l'instrument d'entraînement (9, 10, 11) le long de et contre la plaque d'indicateur (18) tout en étant en contact avec ledit instrument d'entraînement.

2. Dispositif selon la revendication 1, **caractérisé en ce que** l'instrument d'entraînement (9, 10, 11) qui crée le courant mentionné ci-dessus comprend un disque (14) qui est capable de tourner autour de son axe, sur lequel lesdites racines alimentaires (4) sont transportées, la plaque d'indicateur (18) s'étendant suivant au moins une partie du périmètre de ce disque (14) et transversalement par rapport à sa surface.

3. Dispositif selon la revendication 2, **caractérisé en ce que** la plaque d'indicateur mentionnée ci-dessus (18) peut être déplacée par rapport au disque (14) sous la pression des racines alimentaires (4) qui sont guidées contre la plaque d'indicateur (18) par ce dernier, ledit déplacement dépendant de la quantité récoltée des racines alimentaires arrachées (4).

4. Dispositif selon la revendication 2 ou 3, **caractérisé en ce qu'**il est pourvu d'une plaque de guidage éventuellement mobile, en particulier rotative (24) pour guider les racines alimentaires (4), qui abordent sur ledit disque (14), jusqu'au bord extérieur de ce dernier.

5. Dispositif selon l'une quelconque des revendications 1 à 4, **caractérisé en ce que** la plaque d'indicateur mentionnée ci-dessus (18) est montée d'une façon rotative autour d'un axe de rotation (19), de telle sorte qu'elle puisse faire l'objet d'un déplacement qui dépend de la force avec laquelle les racines alimentaires mentionnées ci-dessus (4) poussent contre la plaque d'indicateur (18) au fur et à mesure qu'elles sont déplacées par l'instrument d'entraînement mentionné ci-dessus (9, 10, 11), un moyen étant prévu qui rend possible de mesurer cette force et/ou le moment (20) par rapport à l'axe de rotation (19).

6. Dispositif selon la revendication 5, **caractérisé en ce que** la plaque d'indicateur (18) comprend un bras de moment (21) sur lequel l'axe de rotation mentionné ci-dessus (19) est situé.

7. Dispositif selon la revendication 5 ou 6, **caractérisé en ce que** la position dudit axe de rotation (19) correspond à une position dans laquelle le moment de la force de friction des racines alimentaires exercée sur la plaque d'indicateur (18) intégré sur la surface de la plaque d'indicateur (18) est minimal ou négligeable par rapport au moment des autres forces exercées sur la plaque d'indicateur (18).

8. Dispositif selon l'une quelconque des revendications 5 à 7, **caractérisé en ce que** la plaque d'indicateur (18) est pourvue d'un contrepoids (22), de telle sorte que le centre de gravité de l'ensemble, qui est constitué de la plaque d'indicateur mentionnée ci-dessus (18) et du contrepoids (22), soit situé sur l'axe de rotation mentionné ci-dessus (19).

9. Dispositif selon l'une quelconque des revendications 1 à 8, **caractérisé en ce que** l'instrument d'entraînement mentionné ci-dessus (9, 10, 11) est équipé d'un appareil de pesage qui rend possible de déterminer le poids des racines alimentaires (4), qui sont mises en contact avec ledit instrument d'entraînement (9, 10, 11).

10. Dispositif selon l'une quelconque des revendications 1 à 9, **caractérisé en ce qu'**il est équipé d'un tachymètre qui rend possible de régler la vitesse de propulsion du dispositif, de telle sorte que la quantité récoltée mesurée des racines alimentaires (4) reste constante.
